# EUROPÄISCHE PATENTSCHRIFT

(11) **EP 3 135 364 B1**
(45) Veröffentlichungstag und Bekanntmachung des Hinweises auf die Patenterteilung: **21.04.2021**
(21) Anmeldenummer: 15183213.6
(22) Anmeldetag: 31.08.2015
(51) Int. Cl.: B01D 53/14, B01D 53/18, B01D 53/50, B01D 53/78

(54) **VERFAHREN ZUR RAUCHGASENTSCHWEFELUNG**
METHOD FOR EXHAUST GAS DESULFURIZATION
PROCÉDÉ DE DÉSULFURATION DE GAZ DE FUMÉE

(43) Veröffentlichungstag der Anmeldung: 01.03.2017
(73) Patentinhaber: Steinmüller Engineering GmbH, 51643 Gummersbach (DE)
(72) Erfinder: RASCHE, Dorian, 51643 Gummersbach (DE); BINKOWSKI, Stefan, 51643 Gummersbach (DE)
(74) Vertreter: Godemeyer Blum Lenze Patentanwälte Partnerschaft mbB - werkpatent

(56) Entgegenhaltungen:
- DE-A1- 2 313 264
- DE-A1- 3 721 684
- DE-A1- 19 741 120
- JP-A- S62 193 630
- US-A- 4 305 909
- US-A- 5 352 366
- US-A- 5 512 072

## Beschreibung

Die Erfindung betrifft Verfahren zur Behandlung eines Rauchgasstroms zur Verringerung des SOₓ-Gehaltes im Rauchgas unter Verwendung von Absorptionsmitteln auf Basis von Suspensionen enthaltend Calciumverbindungen.

### Technischer Hintergrund

Derartige Verfahren und Vorrichtungen dienen insbesondere der Entschwefelung von Abgasen, die bei fossil befeuerten Kraftwerken zur Elektrizitätserzeugung oder bei der Müllverbrennung entstehen. Diese Abgase bzw. Rauchgase weisen eine Vielzahl von schädlichen Substanzen wie SOx auf. Im Hinblick auf den Umweltschutz ist es notwendig, die Emission dieser Substanzen in die Atmosphäre zu verringern, weswegen eine Abtrennung aus dem Abgas unerlässlich ist.

Die Entschwefelung des Rauchgases erfolgt nach dem folgenden Grundprinzip: das ungereinigte Rauchgas wird in einen Rauchgas-Wäscher eingeleitet und im Wasch- bzw. Absorptionsbereich mit einem Gemisch aus Wasser und Kalkstein beregnet, wodurch das Schwefeldioxid durch chemische Reaktionen weitgehend absorbiert wird. Dabei geht das gasförmige Schwefeldioxid zunächst in der Absorptionsflüssigkeit in Lösung. Durch die Reaktion von Schwefeldioxid mit Kalkstein entsteht schließlich Kalziumsulfit und CO₂. Im unteren Teil des Waschturms, im Absorbersumpf, sammelt sich die mit Kalziumsulfit beladene Wasch- bzw. Absorptionsmittelsuspension. Durch Einblasen von Luft entsteht eine Gipssuspension, die zur Vermeidung von Ablagerungen im Absorbersumpf mittels Rührwerken suspendiert werden kann.

Die nasse Entschwefelung von Rauchgasen aus Kohlekraftwerken durch den Einsatz von Kalksteinsuspension ist ein Verfahren, das bisher entweder im Einkreis-oder im Zweikreisverfahren durchgeführt werden kann.

Im Einkreisverfahren wird das Rauchgas in der Regel in der Mitte in den Absorber geleitet, durchströmt diesen in aufwärts gerichteter Richtung und verlässt den Absorber im oberen Bereich wieder. Die Waschsuspension wird mittels Umwälzpumpen aus dem Absorbersumpf zu den Sprühebenen geführt, über die Düsen im Absorber versprüht und wäscht das Rauchgas so im Gegenstrom. Nach erfolgter SO₂-Absorption fallen die Tropfen wieder in den Absorbersumpf, so dass sich der (Ein)-Kreis der Waschsuspension schließt.

Im Zweikreisverfahren wird die Absorptionszone in zwei Bereiche, die in der Regel übereinander angeordnet sind, geteilt. Das Rauchgas durchströmt die Bereiche nacheinander in aufwärtsgerichteter Richtung. Die Waschsuspension wird im Gegenstrom geführt, jedoch in der Mitte der Absorptionszone wieder abgegriffen, sodass zwei voneinander weitgehende unabhängige Waschsuspensionskreisläufe entstehen. Die Kalksteinsuspension wird (hauptsächlich) in den oberen Kreislauf gegeben, der Gips wird aus dem unteren Kreislauf abgezogen. Durch eine Überführung der Suspension aus dem oberen in den unteren Kreislauf wird der Absorber gesteuert.

In der DE 29 44 536 und DE 30 11 592 wird ein Verfahren beschrieben, bei dem zumindest ein Teil des verbrauchten Absorptionsmittels des zweiten oberen Kreislaufs aufgefangen und über eine Auffang- und Rücklaufeinrichtung zu einem Absorberversorgungsbehälter zurückgeführt wird.

Aus der DE 43 45 364 ist bekannt, in einem solchen Zweikreis-Wäscher das verbrauchte Absorptionsmittel des zweiten (oberen) Kreislaufes in den Behälter für das Absorptionsmittel zurückzuführen und dort die Reaktion zwischen Schwefeloxidverbindungen und Calciumverbindungen fortzusetzen.

Die DE-A-196 01 193 betrifft ein Verfahren, bei welchem das Absorptionsmittel im Inneren des Wäschers in einem oben offenen Behälter vorgehalten und nach dem Waschvorgang zumindest teilweise wieder in ihm aufgefangen wird, wobei der Flüssigkeitspegel im Behälter höher liegt als der Flüssigkeitspegel im Sumpf des Wäschers.

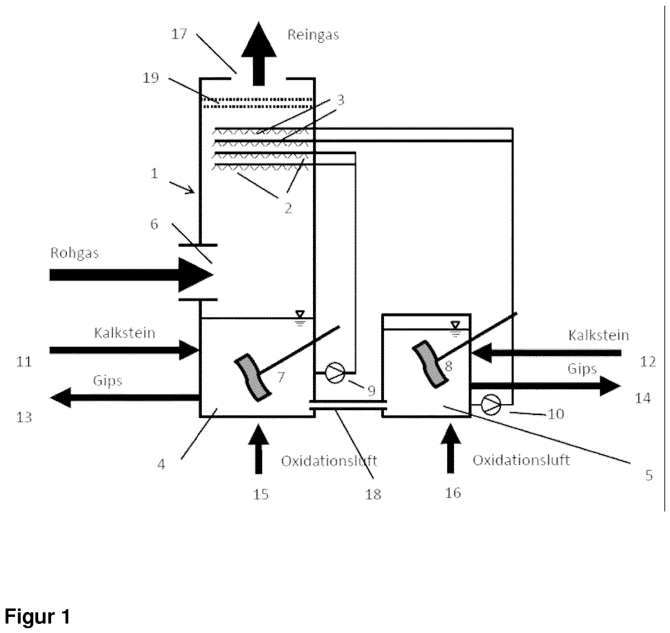

In der DE 10 2010 002 768 A1 werden verschiedene Verfahren beschrieben. Figur 2 betrifft eine Vorrichtung für ein Ein-Kreis-Verfahren. Figur 1 betrifft eine Vorrichtung für ein Zwei-Kreis-Verfahren, wobei das im oberen Abschnitt versprühte Absorptionsmittel von einer oberhalb der unteren Sprüheinrichtung eingebauten Sammeleinrichtung aufgefangen und wieder zur oberen Sprüheinrichtung geführt wird, und damit (fast) vollständig vom unteren Kreislauf getrennt bleibt. Figur 3 betrifft eine Vorrichtung für ein Zwei-Kreis-Verfahren, wobei das im oberen Abschnitt versprühte Absorptionsmittel zusammen mit dem von der unteren Sprüheinrichtung versprühten Absorptionsmittel aufgefangen wird. Das Absorptionsmittel gelangt in den einen Absorbersumpf und wird von dort in zwei Teilströme aufgetrennt, um die unteren und die oberen Sprüheinrichtungen direkt zu versorgen.

Das Dokument US 4,305,909 beschreibt eine Vorrichtung und ein Verfahren zur Verringerung von SOx in Rauchgasen mit Hilfe von Kalzium-haltigen Suspensionen. Dabei gelangt das Rauchgas unten in den Wäscher und wird über zwei Sprühstufen gereinigt. Die versprühte Lösung wird gemeinsam im Sumpf gesammelt. Ein Teilstrom gelangt aus dem Sumpf direkt in den Wäscher zu den unteren Sprühdüsen. Ein weiterer Teilstrom wird über andere Behälter zu den oberen Sprühdüsen geleitet.

Das Dokument DE 2 313 264 betrifft ein Verfahren zur Verringerung von SOx in Rauchgasen mit Hilfe von Kalzium-haltigen Suspensionen. Das Rauchgas durchströmt zwei Bereiche, in denen es mit Absorptionslösung in Kontakt kommt.

Das Dokument JP 62-193630 offenbart ein Verfahren zur Verringerung von SOx in Rauchgasen mit Hilfe von Kalzium-haltigen Suspensionen. Das Rauchgas wird über einen Einlass in den Wäscher geleitet und durchströmt zwei Sprühbereiche. Die versprühte Lösung wird gemeinsam im Sumpf gesammelt. Ein Teilstrom gelangt aus dem Sumpf direkt in den Wäscher zu den unteren Sprühdüsen. Ein weiterer Teilstrom wird über eine getrennte Leitung zu den oberen Sprühdüsen geleitet. In diese zur zweiten oberen Sprühebene führende Leitung wird frische Absorptionslösung eingebracht und mit der zirkulierenden Absorptionsmittellösung gemischt.

Aufgabe der vorliegenden Erfindung war es die nasse Entschwefelung von Rauchgasen effizienter durchzuführen und eine höhere Feinreinigung des Rauchgases zu erreichen.

### Beschreibung der Erfindung

Die technische Aufgabe wird gelöst durch ein Verfahren zur Behandlung eines Rauchgasstroms zur Verringerung des SOₓ-Gehaltes im Rauchgas unter Verwendung von Absorptionsmitteln auf Basis von Suspensionen enthaltend Calciumverbindungen, wobei das Rauchgas zunächst einen ersten Bereich und anschließend einen zweiten Bereich eines Rauchgas-Wäschers durchströmt, wobei das Rauchgas im ersten Bereich und im nachfolgenden zweiten Bereich mit Absorptionsmittel besprüht wird, wobei der pH-Wert des im ersten Bereich versprühten Absorptionsmittels niedriger ist als der pH-Wert des im zweiten Bereich versprühten Absorptionsmittels, und das im ersten und im zweiten Bereich versprühte Absorptionsmittel gemeinsam aufgefangen wird,
wobei in einem ersten Kreislauf das Rauchgas im Rauchgas-Wäscher in einem ersten Bereich des Rauchgasstroms mit Absorptionsmittel besprüht wird, das Absorptionsmittel in einen Absorbersumpf gelangt und ein erster Teilstrom des Absorptionsmittels vom Absorbersumpf direkt zum erneuten Versprühen in den ersten Bereich des Rauchgas-Wäschers geführt wird,
wobei das Verfahren einen zweiten Absorptionsmittel-Kreislauf beinhaltet, wobei ein zweiter Teilstrom des Absorptionsmittels vom Absorbersumpf in einen dem Absorbersumpf nachgeschalteten zweiten Absorptionsmittelaufnahmebehälter geführt wird, und anschließend im zweiten Bereich des Rauchgasstroms versprüht wird, und das Absorptionsmittel zusammen mit dem im ersten Bereich versprühten Absorptionsmittel zurück in den Absorbersumpf gelangt, und dass mindestens eine der folgenden Maßnahmen durchgeführt wird:
i) wobei der pH-Wert des im ersten Bereich versprühten Absorptionsmittels von 4,5 bis 5,9 und der pH-Wert des im zweiten Bereich versprühten Absorptionsmittels von 5,0 bis 6,8 beträgt,
   und/oder
ii wobei der pH-Wert des Absorptionsmittels im Absorbersumpf von 4,5 bis 5,9 und der pH-Wert des Absorptionsmittels im zweiten Absorptionsmittelaufnahmebehälter von 5,0 bis 6,8 beträgt.

In einem bevorzugten Verfahren weist der Rauchgas-Wäscher Sprüheinrichtungen zum Versprühen der Absorptionsmittel und einen Absorbersumpf zur Aufnahme des Absorptionsmittels auf, wobei das Rauchgas den Rauchgas-Wäscher von unten nach oben durchströmt und mit Absorptionsmittel besprüht wird, das von ersten Sprüheinrichtungen und von zweiten Sprüheinrichtungen versprüht wird, das Absorptionsmittel in den Absorbersumpf gelangt und ein erster Teilstrom des Absorptionsmittels direkt vom Absorbersumpf zum Versprühen in den Rauchgas-Wäscher geführt wird,
wobei ein zweiter Teilstrom des Absorptionsmittels von dem Absorbersumpf in einen dem Absorbersumpf nachgeschalteten zweiten Absorptionsmittelaufnahmebehälter geführt wird, anschließend im Rauchgas-Wäscher mittels der zweiten Sprüheinrichtungen versprüht wird und wieder in den Absorbersumpf gelangt,
wobei die zweiten Sprüheinrichtungen oberhalb der ersten Sprüheinrichtungen und bzgl. des Rauchgasstromes stromabwärts der ersten Sprüheinrichtungen liegen.

Vorzugsweise ist der pH-Wert des Absorptionsmittels im Absorbersumpf niedriger als der pH-Wert des Absorptionsmittels im nachgeschalteten zweiten Absorptionsmittelaufnahmebehälter. So beträgt der pH-Wert des Absorptionsmittels im Absorbersumpf von 4,5 bis 5,9 und der pH-Wert des Absorptionsmittels im zweiten Absorptionsmittelaufnahmebehälter von 5,0 bis 6,8.

In einem weiteren bevorzugten Verfahren wird in den Absorbersumpf und in den dem Absorbersumpf nachgeschalteten zweiten Absorptionsmittelaufnahmebehälter Luft oder Sauerstoff zur Oxidation zugeführt.

Weiterhin ist bevorzugt, dass in den Absorbersumpf frisches Absorptionsmittel auf Basis von Suspensionen enthaltend Calciumverbindungen kontinuierlich oder diskontinuierlich zugeführt wird. Besonders bevorzugt wird in den Absorbersumpf und in den dem Absorbersumpf nachgeschalteten zweiten Absorptionsmittelaufnahmebehälter frisches Absorptionsmittel auf Basis von Suspensionen enthaltend Calciumverbindungen kontinuierlich oder diskontinuierlich zugeführt.

In einer ganz besonders bevorzugten Ausführungsform wird in den Absorbersumpf und in den dem Absorbersumpf nachgeschalteten zweiten Absorptionsmittelaufnahmebehälter frisches Absorptionsmittel auf Basis von Suspensionen enthaltend Calciumverbindungen kontinuierlich oder diskontinuierlich zugeführt, sowie Luft oder Sauerstoff zur Oxidation.

Wie bereits erläutert wird das Rauchgas erfindungsgemäß im ersten Bereich und im nachfolgenden zweiten Bereich des Rauchgasstroms mit Absorptionsmittel besprüht, wobei der pH-Wert des im ersten Bereich versprühten Absorptionsmittels niedriger ist als der pH-Wert des im zweiten Bereich versprühten Absorptionsmittels. Das im ersten und im zweiten Bereich versprühte Absorptionsmittel wird gemeinsam aufgefangen bzw. gesammelt und gelangt gemeinsam in den Absorbersumpf. Dies bedeutet, dass im Wesentlichen das ganze im zweiten Bereich versprühte Absorptionsmittel, d.h. mindestens 90%, vorzugsweise mindestens 95%, weiter bevorzugt mindestens 98%, noch weiter bevorzugt mindestens 99% des im zweiten Bereich versprühten und rezyklierten Absorptionsmittels mit dem im ersten Bereich versprühten Absorptionsmittel zusammen gesammelt wird und direkt in den Absorbersumpf gelangt.

Das erfindungsgemäße Verfahren wird vorteilhafterweise in einer Vorrichtung durchgeführt zur Behandlung eines Rauchgasstroms mit Absorptionsmitteln auf Basis von Suspensionen enthaltend Calciumverbindungen, wobei die Vorrichtung einen Behälter, erste und zweite im Behälter angeordnete Sprüheinrichtungen zum Versprühen der Absorptionsmittel aufweist, wobei die zweiten Sprüheinrichtungen oberhalb der ersten Sprüheinrichtungen liegen, sowie einen Absorbersumpf und einen dem Absorbersumpf nachgeschalteten zweiten Absorptionsmittelaufnahmebehälter zur Aufnahme des Absorptionsmittels aufweist, wobei oberhalb des Absorbersumpfes und unterhalb der ersten Sprüheinrichtungen ein Gaseintritt für den Rauchgasstrom vorgesehen ist, wobei zwei Absorptionsmittelkreisläufe vorgesehen sind, wobei im ersten Absorptionsmittelkreislauf ein erster Teilstrom des Absorptionsmittels direkt vom Absorbersumpf zum Versprühen zu den ersten Sprüheinrichtungen geführt wird, und ein zweiter Teilstrom des Absorptionsmittels von dem Absorbersumpf zu dem dem Absorbersumpf nachgeschalteten zweiten Absorptionsmittelaufnahmebehälter und von dort zu den zweiten Sprüheinrichtungen geführt wird, wobei die in den ersten und zweiten Sprüheinrichtungen versprühten Absorptionsmittelströme in den Absorbersumpf zurückgeführt werden.

Der dem Absorbersumpf nachgeschaltete zweite Absorptionsmittelaufnahmebehälter ist ein vom Absorbersumpf getrennter Behälter, der in fluider Verbindung mit dem Absorbersumpf steht. In der einfachsten Ausführungsform stellt die Verbindung zwischen Absorbersumpf und dem nachgeschalteten zweiten Absorptionsmittelaufnahmebehälter eine Rohrleitung dar. Die Verbindung zwischen dem Absorbersumpf und dem nachgeschalteten zweiten Absorptionsmittelaufnahmebehälter kann aber auch mit einer Pumpe versehen sein, die das Absorptionsmittel zum dem nachgeschalteten zweiten Absorptionsmittelaufnahmebehälter führt.

Der Absorbersumpf und der dem Absorbersumpf nachgeschaltete zweite Absorptionsmittelaufnahmebehälter können eine oder mehrere Zuführungen zur Zuführung von Luft oder Sauerstoff zur Oxidation aufweisen.

Der Absorbersumpf kann weiterhin eine oder mehrere Zuführungen zur Zuführung von frischem Absorptionsmittel auf Basis von Suspensionen enthaltend Calciumverbindungen aufweisen. Der Absorbersumpf und der dem Absorbersumpf nachgeschaltete zweite Absorptionsmittelaufnahmebehälter können jeweils eine oder mehrere Zuführungen aufweisen zur Zuführung von frischem Absorptionsmittel auf Basis von Suspensionen enthaltend Calciumverbindungen.

Der Absorbersumpf und der zweite Behälter können jeweils mit Oxidationsluftzufuhr und Zufuhr für frisches Absorptionsmittel versehen sein.

Weiterhin kann oberhalb der zweiten Sprüheinrichtung ein Tropfenabscheider vorgesehen sein.

Die Vorrichtung kann so ausgestaltet sein, dass insbesondere keine Trennung zwischen der ersten und zweiten Sprüheinrichtung vorliegt, d.h. die erste und die zweite Sprüheinrichtung sind im gleichen Raum des Behälters angeordnet, so dass das in der ersten und zweiten Sprüheinrichtung versprühte Absorptionsmittel gemeinsam gesammelt wird und zusammen in den Absorbersumpf gelangt.

Das neue Verfahren zur nassen Rauchgasentschwefelung bzw. die neue Vorrichtung zur Durchführung des Verfahrens kombiniert die Vorteile des Einkreis- und des Zweikreiswäschers miteinander. Durch die Aufteilung des Absorbersumpfes kann das Absorptionsmittel bei zwei verschiedenen pH-Werten gesteuert werden. Dies bedeutet, dass im ersten Absorptionsmittel-Kreislauf der pH-Wert unterhalb und im zweiten Kreislauf oberhalb des üblichen pH-Wertes eines Einkreiswäschers liegt, und so die primären Aufgaben des Absorbers deutlich effizienter erfüllt werden kann. Die Kalksteinauflösung ist bei einem geringeren pH-Wert im ersten Absorbersumpf deutlich schneller, sodass im ersten Absorbersumpf eine erhöhte Auflösung erfolgt. Dies führt dazu, dass der Carbonatgehalt des Gipses fällt und für die Auflösung des Kalksteins deutlich weniger Reaktionsvolumen (Sumpfvolumen) bereitgestellt werden muss. Im zweiten Aufnahmebehälter für das Absorptionsmittel, der dem (ersten) Absorbersumpf nachgeschaltet ist, ist der pH-Wert höher als im (ersten) Absorbersumpf. Der höhere pH-Wert im nachgeschalteten Absorptionsmittelaufnahmebehälter stellt sich bereits durch das nachträgliche Lösen der Substanzen (Kalkstein) im aus dem Absorbersumpf kommenden Absorptionsmittel ein. Bevorzugt kann im nachgeschalteten Absorptionsmittelaufnahmebehälter der pH-Wert zusätzlich aktiv auf einen höheren Wert als im ersten Kreislauf bzw. im Absorbersumpf eingestellt werden. Der höhere pH-Wert im nachgeschalteten Absorptionsmittelaufnahmebehälter bzw. im zweiten Kreislauf führt dazu, dass die SO₂ Absorption deutlich effizienter durchgeführt werden kann. Der positive Einfluss des erhöhten pH-Wertes des Absorptionsmittels im zweiten Kreislauf macht sich vor allem im Bereich der Feinreinigung des Rauchgases bemerkbar, weshalb aus dem zweiten Absorptionsmittelaufnahmebehälter die oberen Sprühebenen beaufschlagt werden.

Ein weiterer Vorteil der vorliegenden Erfindung ist der Wegfall des Einbaus einer Sammelvorrichtung für die Waschsuspension bzw. das Absorptionsmittel im Absorber, sodass das Rauchgas ungehindert den Absorber durchströmen kann. Dadurch wird der Druckverlust verringert und eine gleichmäßigere Verteilung des Rauchgases über den Querschnitt möglich. Dies führt ebenfalls zu einer erhöhten Gesamtabreinigung.

Bei dem erfindungsgemäßen Verfahren wird das Rauchgas im ersten Bereich und im nachfolgenden zweiten Bereich mit Absorptionsmittel besprüht. Erfindungsgemäß ist dabei der pH-Wert des im ersten Bereich versprühten Absorptionsmittels niedriger als der pH-Wert des im zweiten Bereich versprühten Absorptionsmittels. Das im ersten und im zweiten Bereich versprühte Absorptionsmittel wird gemeinsam aufgefangen bzw. gesammelt und gelangt gemeinsam in den Absorbersumpf. Im Gegensatz zu den im Stand der Technik beschriebenen Zwei-Kreis-Verfahren wird das im zweiten Kreislauf versprühte bzw. das durch die zweiten Sprüheinrichtungen versprühte Absorptionsmittel gemäß der vorliegenden Erfindung nicht getrennt vom im ersten Kreislauf versprühten bzw. nicht getrennt vom durch die ersten Sprüheinrichtungen versprühte Absorptionsmittel aufgefangen und abgeleitet. Dies bedeutet, dass gemäß der vorliegenden Erfindung das im ersten und im zweiten Bereich versprühte Absorptionsmittel zusammen in den Absorbersumpf gelangt und vermischt wird.

Vorteilhafterweise und bevorzugt sind beide Aufnahmebehälter für das Absorptionsmittel, der Absorbersumpf und der nachgeschaltete Absorptionsmittelaufnahmebehälter, mit Rührern versehen.

Durch die Aufteilung des Absorbersumpfes in zwei in Reihe geschaltete Rührkessel kann bei gleichbleibender Leistung des Sumpfes das Gesamtvolumen deutlich reduziert werden, sodass das Volumen der beiden Sümpfe zusammengerechnet kleiner ausfällt als das Volumen eines herkömmlichen Einkreiswäschers. Trotz dieser Verkleinerung des Sumpfvolumens kann die effektive Verweilzeit der verfahrenstechnisch wichtigen Substanzen (Kalkstein, Gips) beibehalten werden und sogar gezielt unabhängig voneinander gesteuert werden.

Durch eine Überdimensionierung des zweiten Absorptionsmittelaufnahmebehälters ist es möglich, den Notentleerungsbehälter des Kraftwerkes einzusparen, wodurch weitere Kostenvorteile entstehen. Der Notentleerungsbehälter bleibt weitgehend ungenutzt und nimmt im Falle einer Revision den Absorberinhalt auf, um das Absorptionsmittel anschließend beim Anfahren der Anlage wieder verwenden zu können. Bei Anwendung des Verfahrens der vorliegenden Erfindung, bei dem zwei Aufnahmebehälter für das Absorptionsmittel verwendet werden, der Absorbersumpf und der nachgeschaltete Absorptionsmittelaufnahmebehälter, ist der Notentleerungsbehälter nicht notwendig, da durch ein Ventil zwischen den beiden Sümpfen der zweite Sumpf gefüllt bleiben könnte. Überschüssige Flüssigkeit könnte, falls nötig, entsorgt werden.

Die oben beschriebene Technik der Rauchgasentschwefelungsanlage (REA) mit zwei Absorptionsmittelaufnahmebehältern kann zudem auch an bestehenden Anlagen nachgerüstet werden. Ist der Absorbersumpf einer bestehenden Anlage zu klein dimensioniert und soll eine zusätzliche Sprühebene nachgerüstet werden, so kann durch den Einbau eines zweiten Absorptionsmittelaufnahmebehälters die gesamte Abscheideleistung der Anlage zusätzlich erhöht werden.

**Figur 1** zeigt eine Vorrichtung zur Behandlung eines Rauchgasstroms. Der in der Figur dargestellte Rauchgas-Wäscher weist einen Behälter 1 auf, in dessen Fuß ein Absorbersumpf 4 ausgebildet ist. Der Behälter 1 ist oberhalb des Absorbersumpfes 4 mit einem Eintritt 6 für zu behandelndes Gas versehen. Zur Ausbildung einer ersten Waschstufe ist mit Abstand von der Oberfläche des Absorbersumpfes 4 eine in der Figur schematisch dargestellte erste Sprüheinrichtung 2 vorgesehen. Das Absorptionsmittel aus dem Absorbersumpf 4 wird über eine oder mehrere Pumpen 9 im Kreislauf gefahren.

Oberhalb der ersten Sprüheinrichtung 2 ist eine zweite Sprüheinrichtung 3 angeordnet. Die Sprüheinrichtungen 2, 3 können eine oder mehrere Sprühebenen aufweisen, wobei in der Figur zwei Sprühebenen für die erste Sprüheinrichtung 2 und zwei Sprühebenen für die zweite Sprüheinrichtung 3 dargestellt sind. Die zweite Sprüheinrichtung 3 wird mit einem Absorptionsmittel beaufschlagt, das über den zweiten Absorptionsmittelaufnahmebehälter 5, eine oder mehrere Pumpen 10, die zweite Sprüheinrichtung 3, den Absorbersumpf 4 und eine Verbindungsleitung 18 zum zweiten Absorptionsmittelaufnahmebehälter 5 im Kreislauf gefahren wird. Oberhalb der zweiten Sprüheinrichtung 3 ist ein Tropfenabscheider 19 angeordnet, der die von dem Gas mitgerissene Flüssigkeit abscheidet und dem Prozess wieder zuführt, d.h. die abgetrennte Flüssigkeit gelangt in den Absorbersumpf 4. Das Gas wird dementsprechend entfeuchtet.

In der in der Figur gezeigten Ausführungsform wird dem Absorbersumpf 4 sowie dem zweiten Absorptionsmittelaufnahmebehälter 5 bei Durchführung der Entschwefelung frische alkalihaltige Adsorptionsmittelsuspension über die Zuführungen 11, 12 zugeführt. Der Absorbersumpf 4 sowie der zweite Absorptionsmittelaufnahmebehälter 5 ist mit einem oder mehreren Rührwerken 7, 8 versehen.

Zur Erzeugung von Gips wird dem Absorbersumpf 4 und dem zweiten Absorptionsmittelaufnahmebehälter 5 zusätzlich Oxidationsluft über die Zuführungen 15, 16 zugeführt. Die gipshaltige Suspension wird bei 13 bzw. 14 von dem Absorbersumpf 4 und dem zweiten Absorptionsmittelaufnahmebehälter 5 abgezogen. Das behandelte Gas wird am oberen Ende des Behälters 2 über einen Gasabführungsstutzen 17 abgezogen.

### Bezugszeichenliste

1 Behälter
2 erste Sprüheinrichtung
3 zweite Sprüheinrichtung
4 Absorbersumpf
5 Absorptionsmittelaufnahmebehälter
6 Eintritt für Rauchgas
7 Rührwerk (des Absorbersumpfes)
8 Rührwerk (des Absorptionsmittelaufnahmebehälters)
9 Pumpe (1. Kreislauf)
10 Pumpe (2. Kreislauf)
11 Zuführung Calcium-haltiges Absorptionsmittel (zum Absorbersumpf)
12 Zuführung Calcium-haltiges Absorptionsmittel (zum Absorptionsmittelaufnahmebehälter)
13 Entnahmeauslass für Gips (vom Absorbersumpf)
14 Entnahmeauslass für Gips (vom Absorptionsmittelaufnahmebehälter)
15 Zuführung Oxidationsluft (zum Absorbersumpf)
16 Zuführung Oxidationsluft (zum Absorptionsmittelaufnahmebehälter)
17 Gasabführungsstutzen
18 Verbindungsleitung zwischen Absorbersumpf und Absorptionsmittelaufnahmebehälter
19 Tropfenabscheider

## Patentansprüche

1. Verfahren zur Behandlung eines Rauchgasstroms zur Verringerung des SOₓ-Gehaltes im Rauchgas unter Verwendung von Absorptionsmitteln auf Basis von Suspensionen enthaltend Calciumverbindungen, wobei das Rauchgas zunächst einen ersten Bereich und anschließend einen zweiten Bereich eines Rauchgas-Wäschers durchströmt, wobei das Rauchgas im ersten Bereich und im nachfolgenden zweiten Bereich mit Absorptionsmittel besprüht wird, wobei der pH-Wert des im ersten Bereich versprühten Absorptionsmittels niedriger ist als der pH-Wert des im zweiten Bereich versprühten Absorptionsmittels, und das im ersten und im zweiten Bereich versprühte Absorptionsmittel gemeinsam aufgefangen wird,
wobei in einem ersten Kreislauf das Rauchgas im Rauchgas-Wäscher in einem ersten Bereich des Rauchgasstroms mit Absorptionsmittel besprüht wird, das Absorptionsmittel in einen Absorbersumpf gelangt und ein erster Teilstrom des Absorptionsmittels vom Absorbersumpf direkt zum erneuten Versprühen in den ersten Bereich des Rauchgas-Wäschers geführt wird, **dadurch gekennzeichnet, dass** das Verfahren einen zweiten Absorptionsmittel-Kreislauf beinhaltet, wobei ein zweiter Teilstrom des Absorptionsmittels vom Absorbersumpf in einen dem Absorbersumpf nachgeschalteten zweiten Absorptionsmittelaufnahmebehälter geführt wird, und anschließend im zweiten Bereich des Rauchgasstroms versprüht wird, und das Absorptionsmittel zusammen mit dem im ersten Bereich versprühten Absorptionsmittel zurück in den Absorbersumpf gelangt, und dass mindestens eine der folgenden Maßnahmen durchgeführt wird:
i) wobei der pH-Wert des im ersten Bereich versprühten Absorptionsmittels von 4,5 bis 5,9 beträgt und der pH-Wert des im zweiten Bereich versprühten Absorptionsmittels von 5,0 bis 6,8 beträgt,
und/oder
ii) wobei der pH-Wert des Absorptionsmittels im Absorbersumpf von 4,5 bis 5,9 beträgt und der pH-Wert des Absorptionsmittels im zweiten Absorptionsmittelaufnahmebehälter von 5,0 bis 6,8 beträgt.

2. Das Verfahren gemäß Anspruch 1, **dadurch gekennzeichnet, dass** der Rauchgas-Wäscher Sprüheinrichtungen zum Versprühen der Absorptionsmittel und einen Absorbersumpf zur Aufnahme des Absorptionsmittels aufweist, wobei das Rauchgas den Rauchgas-Wäscher von unten nach oben durchströmt und mit Absorptionsmittel besprüht wird, das von ersten Sprüheinrichtungen und von zweiten Sprüheinrichtungen versprüht wird, das Absorptionsmittel in den Absorbersumpf gelangt und ein erster Teilstrom des Absorptionsmittels direkt vom Absorbersumpf zum Versprühen in den Rauchgas-Wäscher geführt wird,
wobei ein zweiter Teilstrom des Absorptionsmittels von dem Absorbersumpf in einen dem Absorbersumpf nachgeschalteten zweiten Absorptionsmittelaufnahmebehälter geführt wird, anschließend im Rauchgas-Wäscher mittels der zweiten Sprüheinrichtungen versprüht wird und wieder in den Absorbersumpf gelangt,
wobei die zweiten Sprüheinrichtungen oberhalb der ersten Sprüheinrichtungen und bzgl. des Rauchgasstromes stromabwärts der ersten Sprüheinrichtungen liegen.

3. Das Verfahren gemäß Anspruch 1 oder 2, **dadurch gekennzeichnet, dass** der pH-Wert des Absorptionsmittels im Absorbersumpf niedriger ist als der pH-Wert des Absorptionsmittels im nachgeschalteten zweiten Absorptionsmittelaufnahmebehälter.

4. Das Verfahren gemäß irgendeinem der Ansprüche 1 bis 3, **dadurch gekennzeichnet, dass** in den Absorbersumpf und in den dem Absorbersumpf nachgeschalteten zweiten Absorptionsmittelaufnahmebehälter Luft oder Sauerstoff zur Oxidation zugeführt wird.

5. Das Verfahren gemäß irgendeinem der Ansprüche 1 bis 4, **dadurch gekennzeichnet, dass** in den Absorbersumpf frisches Absorptionsmittel auf Basis von Suspensionen enthaltend Calciumverbindungen kontinuierlich oder diskontinuierlich zugeführt wird.

6. Das Verfahren gemäß irgendeinem der Ansprüche 1 bis 5, **dadurch gekennzeichnet, dass** in den Absorbersumpf und in den dem Absorbersumpf nachgeschalteten zweiten Absorptionsmittelaufnahmebehälter frisches Absorptionsmittel auf Basis von Suspensionen enthaltend Calciumverbindungen kontinuierlich oder diskontinuierlich zugeführt wird.

## Claims

1. A method for the treatment of a flue gas stream for reducing the SOₓ content in said flue gas by using absorbents based on suspensions that contain calcium compounds, wherein the flue gas initially streams through a first section and then through a second section of a flue gas scrubber, wherein the flue gas is sprayed with absorbent in the first section and in the following second section, wherein the pH of the absorbent sprayed in the first section is lower than the pH of the absorbent sprayed in the second section, and that the absorbent sprayed in the first and second section is collected together,
wherein, in a first loop, the flue gas in the flue gas scrubber is sprayed with absorbent in a first section of the flue gas stream, the absorbent then enters an absorber sump and a first partial stream of the absorbent is conducted directly from the absorber sump to the first section of the flue gas scrubber in order to be sprayed again, **characterized in that** said method contains a second absorbent loop, wherein a second partial stream of the absorbent is conducted from the absorber sump into a second absorbent receptacle downstream of said absorber sump, and subsequently sprayed in the second section of the flue gas stream, and the absorbent reenters the absorber sump together with the absorbent that was sprayed in the first section, and **in that** at least one of the following measures is carried out:
i. wherein the pH of the absorbent sprayed in the first section is from 4.5 to 5.9, and the pH of the absorbent sprayed in the second section is from 5.0 to 6.8,
and/or
ii. the pH of the absorbent in the absorber sump is from 4.5 to 5.9, and the pH of the absorbent in the second absorbent receptacle is from 5.0 to 6.8.

2. The method according to claim 1, **characterized in that** the flue gas scrubber has spraying devices for spraying the absorbents, as well as an absorber sump for receiving the absorbent, wherein the flue gas streams through the flue gas scrubber from bottom to top and is sprayed with absorbent that is sprayed by first spraying devices and by second spraying devices, the absorbent then enters the absorber sump and a first partial stream of the absorbent is conducted directly from the absorber sump into the flue gas scrubber in order to be sprayed,
wherein a second partial stream of the absorbent is conducted from the absorber sump into a second absorbent receptacle downstream of said absorber sump, then sprayed inside the flue gas scrubber using the second spraying devices and then reenters the absorber sump,
wherein the second spraying devices are located above the first spraying devices and, with regard to the flue gas stream, downstream of said first spraying devices.

3. The method according to claim 1 or 2, **characterized in that** the pH of the absorbent in the absorber sump is lower than the pH of the absorbent in the downstream second absorbent receptacle.

4. The method according to any one of claims 1 to 3, **characterized in that** air or oxygen is fed into the absorber sump and into the second absorbent receptacle downstream of said absorber sump for the purpose of oxidation.

5. The method according to any one of claims 1 to 4, **characterized in that** fresh absorbent based on suspensions that contain calcium compounds is fed continuously or discontinuously into the absorber sump.

6. The method according to any one of claims 1 to 5, **characterized in that** fresh absorbent based on suspensions that contain calcium compounds is fed continuously or discontinuously into the absorber sump and into the second absorbent receptacle downstream of said absorber sump.

## Revendications

1. Procédé de traitement d'un courant de gaz de combustion pour diminuer la teneur en SOₓ- dans le gaz de combustion en utilisant des agents d'absorption sur la base de suspensions contenant des composés de calcium, dans lequel le gaz de combustion traverse en premier lieu une première zone et ensuite une seconde zone d'un laveur de gaz de combustion, dans lequel le gaz de combustion est pulvérisé dans la première zone et la seconde zone suivante avec un agent d'absorption, dans lequel la valeur du pH de l'agent d'absorption pulvérisé dans la première zone est inférieure à la valeur de pH de l'agent d'absorption pulvérisé dans la seconde zone, et l'agent d'absorption pulvérisé dans la première et dans la seconde zone est recueilli en un ensemble,
dans lequel dans le premier circuit le gaz de combustion dans le laveur de gaz de combustion est pulvérisé dans une première zone du courant de gaz de combustion avec un agent d'absorption, l'agent d'absorption pénètre dans un collecteur d'absorption et un premier courant partiel de l'agent d'absorption du collecteur d'absorption est conduit directement pour une nouvelle pulvérisation dans la première zone du laveur de gaz de combustion, **caractérisé en ce que** le procédé comprend un second circuit d'agent d'absorption, dans lequel un second courant partiel de l'agent d'absorption du collecteur d'absorption est conduit dans un deuxième récipient de recueil d'agent d'absorption monté en aval du collecteur d'absorption, et ensuite est pulvérisé dans la seconde zone du courant de gaz de combustion, et l'agent d'absorption conjointement avec l'agent d'absorption pulvérisé dans la première zone retourne dans le collecteur d'absorption, et **en ce qu'**au moins l'une des mesures suivantes est réalisée :
i) la valeur de pH de l'agent d'absorption pulvérisé dans la première zone allant de 4,5 à 5,9 et la valeur de pH de l'agent d'absorption pulvérisé dans la seconde zone allant de 5,0 à 6,8,
et/ou
ii) la valeur de pH de l'agent d'absorption du collecteur d'absorption allant de 4,5 à 5,9 et la valeur de pH de l'agent d'absorption dans le second récipient de recueil d'agent d'absorption allant de 5,0 à 6,8.

2. Procédé selon la revendication 1, **caractérisé en ce que** le laveur de gaz de combustion présente des dispositifs de pulvérisation pour pulvériser l'agent d'absorption et un collecteur d'absorption pour recueillir l'agent d'absorption, dans lequel le gaz de combustion traverse le laveur de gaz de combustion du bas vers le haut et est pulvérisé avec l'agent d'absorption, **en ce qu'**il est pulvérisé par des premiers dispositifs de pulvérisation et des seconds dispositifs de pulvérisation, **en ce que** l'agent d'absorption pénètre dans le collecteur d'absorption et un premier courant partiel de l'agent d'absorption est conduit directement du collecteur d'absorption pour pulvériser dans le laveur de gaz de combustion,
dans lequel un second courant partiel de l'agent d'absorption est conduit du collecteur d'absorption dans un deuxième récipient de recueil d'agent d'absorption monté en aval du collecteur d'absorption, ensuite est pulvérisé dans le laveur de gaz de combustion au moyen des seconds dispositifs de pulvérisation et retourne dans le collecteur d'absorption,
dans lequel les seconds dispositifs de pulvérisation se situent au-dessus des premiers dispositifs de pulvérisation et concernant le courant de gaz de combustion en aval des premiers dispositifs de pulvérisation.

3. Procédé selon la revendication 1 ou 2, **caractérisé en ce que** la valeur de pH de l'agent d'absorption dans le collecteur d'absorption est inférieure à la valeur de pH de l'agent d'absorption dans le second récipient de recueil d'agent d'absorption monté en aval.

4. Procédé selon l'une quelconque des revendications 1 à 3, **caractérisé en ce que** dans le collecteur d'absorption et dans le second récipient de recueil d'agent d'absorption monté en aval du collecteur d'absorption de l'air ou de l'oxygène est fourni pour l'oxydation.

5. Procédé selon l'une quelconque des revendications 1 à 4, **caractérisé en ce que** dans le collecteur d'absorption un agent d'absorption frais sur la base de suspensions contenant des composés de calcium est fourni de manière continue ou de manière discontinue.

6. Procédé selon l'une quelconque des revendications 1 à 5, **caractérisé en ce que** dans le collecteur d'absorption et dans le second récipient de recueil d'agent d'absorption monté en aval du collecteur d'absorption un agent d'absorption frais sur la base de suspensions contenant des composés de calcium est fourni de manière continue ou discontinue.
